# EUROPEAN PATENT SPECIFICATION

(11) **EP 3 353 258 B1**
(45) Date of publication and mention of the grant of the patent: **28.10.2020**
(21) Application number: 16849125.6
(22) Date of filing: 14.01.2016
(51) Int. Cl.: C09J 175/04, C08G 18/06, C08G 18/72, C09J 175/06, C08G 18/08

(54) **CHEMICAL RESISTANT POLYURETHANE ADHESIVE**
CHEMIKALIENBESTÄNDIGER POLYURETHANKLEBSTOFF
ADHÉSIF POLYURÉTHANNE RÉSISTANT AUX PRODUITS CHIMIQUES

(30) Priority: 21.09.2015 US 201562221197 P
(43) Date of publication of application: 01.08.2018
(73) Proprietor: 3M Innovative Properties Company, St. Paul, MN 55133-3427 (US)
(72) Inventor: CHEN, Zhong, Saint Paul, Minnesota 55133-3427 (US); LU, Yongshang, Saint Paul, Minnesota 55133-3427 (US); MA, Jingjing, Saint Paul, Minnesota 55133-3427 (US); ANDERSON, Jonathan J., Saint Paul, Minnesota 55133-3427 (US)
(74) Representative: Isarpatent
(86) International application number: PCT/US2016/013372
(87) International publication number: WO 2017/052680

(56) References cited:
- EP-A1- 1 146 061
- WO-A1-01/62817
- WO-A1-01/62818
- WO-A1-2005/066234
- WO-A1-2009/129292
- US-A- 5 608 000
- US-A- 5 692 937
- US-A- 5 708 073
- US-A1- 2006 089 452
- US-A1- 2013 143 010
- JOHN BURKE: 'Solubility Parameters: Theory and Application' COOL.CONSERVATIONUS, [Online] 2011, page 3, 7, 10, XP055519923 Retrieved from the Internet: <URL:http://cool.conservation-us.org/coolai c/sg/bpg/annual/v03/bp03-04.html> [retrieved on 2016-03-07]

## Description

### Summary of the Invention

Disclosed is a pressure sensitive adhesive composition comprising a polyurethane polymer, wherein the polyurethane polymer comprises the reaction product of an aliphatic polyisocyanate component comprising a polyisocyanate that is a liquid at 25°C; a polyol component comprising repeat units of an ortho- or meta- phthalate, and an alkylene group comprising at least 4 carbon atoms; and a functional acid containing compound: wherein the pressure sensitive adhesive has a G' less than 1 MPa at 25°C and a frequency of 1 hertz. Further disclosed are a laminating tape comprising a substrate; and a layer of the pressure sensitive adhesive composition according to the invention disposed on a major surface of the substrate, an illuminated display device comprising a component bonded with the pressure sensitive adhesive of the invention, and an article comprising a substrate; and a primer layer comprising the polyurethane polymer above.

Described is a pressure sensitive adhesive composition comprises a polyurethane polymer that comprises the reaction product of an aliphatic polyisocyanate component, a polyol component, and a functional acid containing compound. The polyol component can have a total solubility parameter ranging from 10 to 14 (cal/cm³)^{1/2}. The polyol component typically has hydrogen bonding ranging from 3.5 to 6. The polyol component typically comprises a polyester polyol, a polycaprolactone polyol, a polycarbonate polyol, or a combination thereof. The polyol component, aliphatic isocyanate component, or combination thereof can comprise at least one six-membered (e.g. aromatic) ring structure. The polyol component, aliphatic isocyanate component, or combination thereof can further comprise alkylene groups having at least 4, 5, or 6 carbon atoms.

The polyurethane polymer can comprise the reaction product of an aliphatic polyisocyanate component, a polyol component, and a functional acid containing compound, that comprises polymerized units of an ortho- or meta- phthalate and an alkylene group comprising at least 4 carbon atoms.

The polyol component can comprise a polymeric polyester polyol having the structure 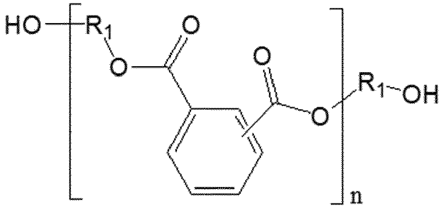 wherein R₁ is independently an alkylene group comprising at least 4 carbon atoms, n is at least 2, and the ester group substituents are bonded to the ring at an ortho- or metaposition.

Also described are articles such as laminating tapes and protective films as well as methods of bonding substrates with the pressure sensitive adhesive and laminating tape.

### Brief Description of the Drawings

The disclosure may be more completely understood in consideration of the following detailed description of various embodiments of the disclosure in connection with the accompanying figures, in which:

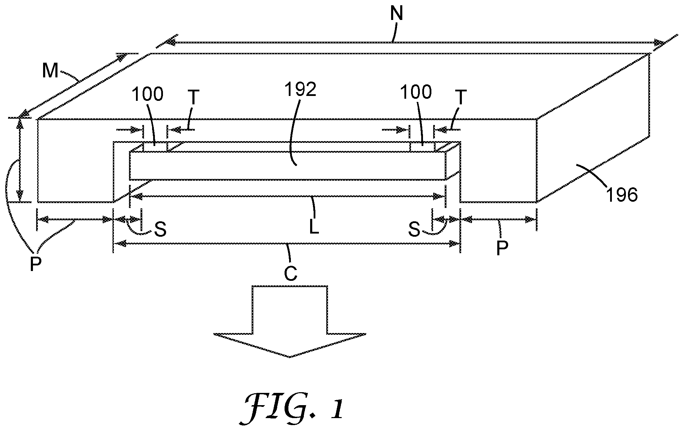

FIG. 1 shows a test configuration for evaluating the impact performance of double-coated adhesive tapes.

### Detailed Description

In electronic devices, particularly mobile electronic devices (e.g., handheld or wearable electronic devices), a lens-bonding adhesive tape (often a double-sided pressure sensitive adhesive tape) is typically used to bond cover glass (or lens) to the frame of the device. For this application, pressure sensitive adhesives should have high strength of adhesive force to properly maintain the adhesion of the cover glass not only when the mobile electronic devices are operating under normal conditions, but also when they are deformed by external forces or subjected to traumatic forces (e.g., dropping of the mobile electronic device onto a hard surface). Regarding deformation, the components of the electronic devices may be deformed when users sit in chairs while the electronic devices are in their pockets or press down the electronic device with their hips. Under such conditions, the pressure sensitive adhesives should have a strength of adhesion sufficient to maintain the adhesion to the cover glass (sometimes referred to as anti-lifting properties). Regarding traumatic forces, the pressure sensitive adhesives should have sufficient impactproof reliability, or drop resistance, such that the pressure sensitive adhesive maintains adhesion of the components even when large instantaneous impacts are applied to the portable electronic devices when dropped.

WO01/62818A1 discloses polyurethane-based adhesives comprising the reaction product of: an isocyanate-reactive component comprising at least two isocyanate-reactive materials, the at least two isocyanate-reactive materials comprising a first isocyanate-reactive material having a weight average molecular weight of less than 2,000 and a second isocyanate-reactive material having a weight average molecular weight of 2,000 or more; an isocyanate-functional component; an optional reactive emulsifying compound; and an optional chain extending agent

It has been discovered that certain polyurethane adhesive compositions that include the reaction product of a polyol component, an aliphatic polyisocyanate component, and a functional acid containing compound, exhibit a rare combination of drop resistance and anti-lifting performance, as well as chemical resistance, which make them particularly suitable as adhesives for lens-bonding applications.

In some embodiments, the polyol component comprises an aromatic and/or aliphatic (e.g. polyester, polycaprolactone, polycarbonate) polyol that comprises at least two hydroxyl terminal groups. When the (e.g. polyester) polyol averages 2 hydroxyl groups, it may be characterized as an (e.g. aromatic polyester) diol. In other embodiments, the (e.g. aromatic polyester) polyol may be characterized as an (e.g. aromatic polyester) triol. In yet other embodiments, the (e.g. aromatic polyester) polyol may comprise a mixture of diol and triol, wherein the number of hydroxyl groups averages greater than 2, yet less than 3. Other polyols have 4, 5 or 6 hydroxyl terminal groups. Polyester polyols can be obtained by, for example, an esterification reaction between a polyol component and an acid component. Examples of acid components include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, 1,4-naphthalenedicarboxylic acid, 4,4'-biphenyldicarboxylic acid, and acid anhydrides thereof.

An aromatic polyester polyol can be produced by polymerizing an aromatic dicarboxylic acid with an aliphatic diol, as known in the art. In one embodiments, the aromatic dicarboxylic acid typically comprises a major amount of isophthalic acid or phthalic acid. The polyester polyol may optionally be produced from a minor amount of other aromatic dicarboxylic acid such as terephthalic acid. Further, the polyester polyol may optionally be produced from a minor amount of cycloaliphatic dicarboxylic acids such as 1,3-cyclopentanedicarboxylic acid, 1,2-cyclohexanedicarboxylic acid, 1,4-cyclohexanedicarboxylic acid, 2,5-norbornanedicarboxylic acid. These dicarboxylic acids are typically in the form of acid anhydrides.

The aliphatic diol utilized to produce the aromatic or aliphatic (e.g. polyester or polycarbonate) polyol typically comprises a straight-chain or branched alkylene group such as ethylene glycol, diethylene glycol, propylene glycol, 1,3-propanediol, 1,3-butanediol, 1,4-butanediol, 1,5-pentanediol, 1,6-hexanediol, 1,7-heptanediol, 1,8-octanediol, 1,9-nonanediol, 1,10-decanediol, 2,4-dimethyl-2-ethylhexane-1,3-diol, 2,2-dimethyl-1,3-propanediol (neopentyl glycol), 2-ethyl-2-butyl-1,3-propanediol, 2-ethyl-2-isobutyl-1,3-propanediol, 3-methyl-1,5-pentanediol, 2,2,4-trimethyl-1,6-hexanediol, octadecanediol. In typical embodiments, at least one of the aliphatic diols utilized to product the aromatic or aliphatic polyester polyol comprises a straight-chain or branched alkylene group (e.g. R₁ in the formulas below) comprising at least 4, 5 or 6 carbon atoms and typically no greater than 24 or no greater than 36. In some embodiments, the straight-chain or branched alkylene group comprises no greater than 12 or 8 carbon atoms. In some embodiments, straight-chain alkylene groups are preferred.

Described is that the polyol is a polycaprolactone polyol as can be obtained by subjecting a cyclic ester monomer such as epsilon-caprolactone or sigma-valerolactone to ring-opening polymerization. Polycaprolactone polyols comprise an alkylene group having 5 carbons atom.

Described is that the polyol is a polycarbonate polyol as can be obtained from the reaction of aliphatic diols such as butanediol-(1,4) and/or hexanediol-(1,6) with phosgene, diaryl-carbonates such as diphenylcarbonate or with cyclic carbonates such as ethylene or propylene carbonate. Also described are polyester carbonates obtained from the above-mentioned polyesters or polylactones with phosgene, diaryl carbonates or cyclic carbonates. The preparation of the polyester or polycarbonate polyol generally includes utilizing at last one aliphatic diol as previously described. The alkylene group of the aliphatic diol and (e.g. aromatic) polyester or polycarbonate polyol may comprise hydrophobic substituents such halogen substituents. However, such alkylene group generally lacks hydrophilic groups, particularly ether groups such as ethylene oxide and propylene oxide (e.g. repeat) units. Without intending to be bound by theory, it is believed that the inclusion of polyols with hydrophilic groups detracts from the chemical resistance of the resulting polyurethane.

In typical embodiments, a single aliphatic diol is utilized in the preparation of the (e.g. aromatic polyester) polyol. In this embodiment, the aliphatic diol comprises an alkylene group comprising at least 4, 5, or 6 carbon atoms as previously described. Alternatively, two or more aliphatic diol may be utilized in the preparation of the (e.g. aromatic polyester) polyol wherein at least one of such diols comprises an alkylene group comprising at least 4, 5, or 6 carbon atoms as previously described. When a mixture of aliphatic diols are utilized, at least 50, 60, 70, 80, 90 or 95 wt-% of the total amount of diol (or total R₁ alkylene groups) are alkylene groups comprising at least 4, 5, or 6 carbon atoms as previously described.

The polyol is typically a polymer. The (e.g. aromatic polyester) polyol typically has an equivalent weight (molecular weight per hydroxyl group) ranging from about 250 to about 30000. In some embodiments, the equivalent weight of the (e.g. aromatic polyester) polyol is no greater than 20000, 10000, 8000, 7000, 6000, 5000, 4000, 3500, 3000, 2500, or 2000; or between 500 and 30000, 2000 and 20000, 2000 and 10000, or between 2000 and 4000. In the case of diols, the molecular weight of the (e.g. aromatic polyester) polyol is twice that of the equivalent weight just described. In the case of triols, the molecular weight of the (e.g. polyester) polyol is three times the equivalent weight just described.

In one embodiment, the aliphatic polyester polyol may comprise repeat units comprising an (R₁) alkylene group and a terminal ester group or more than one (R₁) alkylene group bonded by means of an ester linkage and a terminal ester group.

An aliphatic polycarbonate polyol may comprise repeat units comprising an (R₁) alkylene group and a terminal carbonate group or more than one (R₁) alkylene group bonded by means of a carbonate linkage and a terminal carbonate group.

In another embodiment, the aromatic polyester polyol may comprise repeat units comprising an aromatic (e.g. phthalate) group (of the dicarboxylic acid) bonded to the (R₁) alkylene group (of the aliphatic diol) by ester linkages. In this embodiment, the ratio of six-member rings to alkylene groups having at least 4, 5, or 6 carbon atoms is about 1:1 and may range from about 1.5:1 to 1:1.5.

The polyol is selected to have certain solubility parameters computed employing group contribution methods as described in the paper by K.L. Hoy, J. Coated Fabrics, Volume 19, 53 (1989). The calculations were carried out employing the program Molecular Modeling Pro Plus from Norgwyn Montgomery Software, Inc. (North Wales, Pa.)

In favored embodiments, the polyol has a total solubility parameter of at least 9.8, 9.9, or 10 (cal/cm³)^{1/2}. The total solubility parameter of the polyol is typically no greater than 14 (cal/cm³)^{1/2}. In some embodiments, the total solubility parameter is no greater than 13, 12.5, 12, 11.5 or 11 (cal/cm³)^{1/2}.

The hydrogen bonding of the polyol is typically at least 3.0, 3.1, 3.2, 3.3, 3.4, or 3.5 (cal/cm³)^{1/2} and typically no greater than 6 (cal/cm³)^{1/2}. In some embodiments, the hydrogen bonding of the polyol is no greater than 5.5 or 5.0 (cal/cm³)^{1/2}. In some embodiments, the dispersion solubility parameter can range from about 7 to 9 (cal/cm³)^{1/2}. Further, the polar solubility parameter can range from about 4 to 6 (cal/cm³)^{1/2}.

The following table depicts several polyols having the total solubility parameter and hydrogen bonding just described in comparison to a polypropylene glycol polyol having a solubility below the specified range.

**Table A**

| **Polyol Structure** | **Solubility Parameters** (cal/cm³)^{1/2} | | | |
|---|---|---|---|---|
| | Total | Dispersion | Polar | Hydrogen Bonding |
| 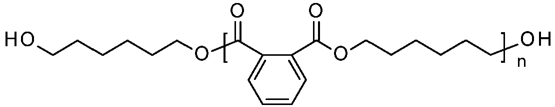 | | | | |
| Polyester polyol available from Stepan Comp any under the trade desigi nation " PH-56". | | | | |
| PH-56 | 10.6 | 7.8 | 5.5 | 4.4 |
| 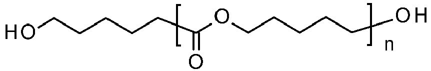 | | | | |
| Polycaprolactone polyol available from Pe "Capa 2200". rstorp UK Ltd. under th e trade designation | | | | |
| Capa 2200 | 10.0 | 8.1 | 4.6 | 3.6 |
| 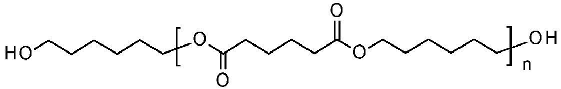 | | | | |
| Polyester Polyol available from Stepan Com 56". pany under the trade des ignation "PC-205P-56". | | | | |
| PC-205P-56 | 10.2 | 8.0 | 4.9 | 3.9 |
| 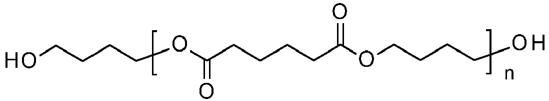 | | | | |
| Polyester polyol available from Chemtur "Fomrez 44-55". a Corpora tion under the trade designation | | | | |
| Fomrez 44-55 | 10.4 | 7.9 | 5.3 | 4.2 |
| 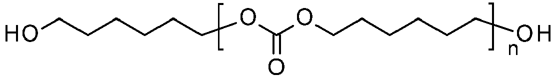 | | | | |
| Polycarbonate polyol available from Bayer designation "Desmophen C2200." Materials S cience LLC und er the tra de | | | | |
| Desmophen C2200 | 10.5 | 8.0 | 5.2 | 4.3 |
| 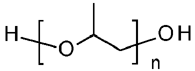 | | | | |
| Polypropylene glycol available from Bayer designation "PPG 2000". Materials S cience LLC und er the tr ade | | | | |
| PPG 2000 | 9.6 | 8.1 | 4.5 | 2.8 |

In some favored embodiments, an aromatic polyester polyol is utilized that can be obtained by reacting an aromatic ortho- or meta- dicarboxylic acid (anhydride) component and an aliphatic diol component. Thus, the polyol component comprises polymerized units of an ortho- or meta- phthalate and comprises polymerized units of an alkylene group comprising at least 4 carbon atoms.

In one embodiment, the polyester polyol (prepared from isophthalic acid or phthalic acid) has the following structure: 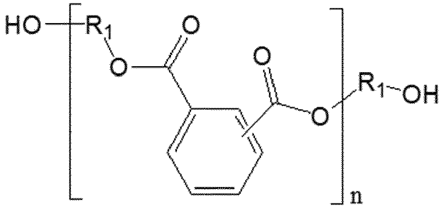
wherein R₁ is independently an alkylene group comprising at least 4 carbon atoms,
n is at least 2, 3, 4 or 5, and
the ester group substituents are bonded to the ring at an ortho- or meta- position.

In some embodiments, n is no greater than 25, 20, 15, or 10.

When the aromatic polyester polyol comprises ortho- or meta- ester moieties, the polyester polyol tends to have a low glass transition temperature, e.g. less than 0, 5, or 10°C. Further, such aromatic polyester polyols tend to be (amorphous) viscous liquids at 25°C. In some embodiments, the aromatic polyester polyols have a viscosity of less than 10,000 or 5,000 cP at 80°C.

Aromatic polyester polyols derived from ortho- phthalic acid are commercially available from Stepan under the trade designation Stepanpol™ and have the following structure:

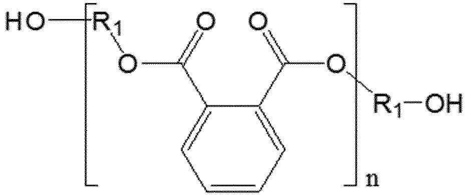

When the aromatic polyester polyol is derived from isoterephthalic acid, the polyester polyol may have the following structure:

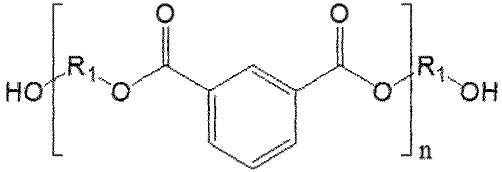

In some favored embodiments, the aromatic polyester diol(s) depicted above are the primary or sole hydroxyl-functional reactant and sole polyol of the polyurethane. Described is that other (e.g. aliphatic polyester, polycaprolactone, or polycarbonate) diol(s) having the previously described solubility parameter(s) are the primary or sole hydroxyl-functional reactant and sole polyol of the polyurethane.

Polyols (e.g. diols) having the previously described solubility parameter(s) are the primary polyol of the polyurethane, such polyols are present in an amount of at least 50, 55, 60, 65, 70, 75, 80, 85, 90, 95 or 99 wt-% of the total amount of polyol components. In some embodiments, aromatic polyester diol(s) are the primary polyol of the polyurethane and are present in an amount of at least 50, 55, 60, 65, 70, 75, 80, 85, 90, 95 or 99 wt-% of the total amount of polyol components. The polyol component may further comprise 1, 5, 10, 15, 20, 25, 30, 35, 40, 45 or 50 wt-% of another polyol or other polyols, such as chain extenders and crosslinkers. In order to maintain the heat resistance and/or chemical resistance contributed by the aromatic polyester diol(s), it is preferred that the other polyol(s) comprise little or no hydrophilic groups, particularly ether groups such as ethylene oxide and propylene oxide (e.g. repeat) units, for the reasons previously described.

In some embodiments, the hydroxyl number of the aromatic polyester polyol or other polyol having the previously described solubility parameters (i.e. prior to reacting with the polyisocyanate component) is at least 5, 10, 25, 30, or 40 mg KOH/g and in some embodiments no greater than 200, 150, 100, 90, 80, or 70 mg KOH/g. In some embodiments, the water content of the aromatic polyester polyol of other polyol is no greater than 0.10 or 0.05 wt-% of the polyol. In some embodiments, the Gardner color of the aromatic polyester polyol or other polyol is no greater than 3, 2, or 1. In some embodiments, the acid number of the aromatic polyester polyol or other polyol is no greater than 5, 4, 3, 2, or 1 mg KOH/g or in other words no greater than 0.005, 0.004, 0.003, 0.002, or 0.001 wt-% of the polyol. Likewise, the polyurethane polymer also comprises a low concentration of acid, as just described.

The aliphatic polyisocyanate component may comprise various polyfunctional isocyanate compounds. Examples of such polyfunctional isocyanate compound include polyfunctional aliphatic isocyanate compounds and polyfunctional aliphatic cyclic isocyanate compounds

Examples of the polyfunctional aliphatic isocyanate compounds include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional aliphatic cyclic isocyanate compounds include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, hydrogenated tetramethylxylene diisocyanate, and bio-based polyfunctional aliphatic cyclic isocyanates, such as 2-heptyl-3,4-bis(9-isocyanatononyl)-1-pentylcyclohexane from BASF Corporation under tradename DDI®1410.

In some embodiments, the polyfunctional aliphatic isocyanate comprises a polyisocyanate that is a liquid at 25°C alone or in combination with minor amount of a polyisocyanate that is a solid at 25°C. Described are cases, such as when the polyol is an aliphatic polyol, where the polyfunctional aliphatic isocyanate is a solid at 25°C

In some embodiments, the polyfunctional aliphatic isocyanate compound comprises an aliphatic cyclic isocyanate compound, such as isophorone diisocyanate (IPDI), hexamethylene diisocyanate, or mixtures thereof. In other embodiments, the polyfunctional aliphatic isocyanate compound can be mixed with aromatic isocyanate compound, such as 1,4 methylene diphenyl diisocyanate (MDI), m-tetramethylene diisocyanate (TMXDI), or mixtures thereof.

Aliphatic polyester polyols (e.g. caprolactone polymers) or aliphatic polycarbonate polyester polyols can be utilized with an cyclic aliphatic polyisocyanate. Aromatic polyester or polycarbonate polyols can be utilized with an aliphatic or cyclic aliphatic polyisocyanate.

In some embodiments the polyurethane adhesive composition comprises the reaction product of the above-described polyisocyanate and polyol components, and also a functional acid containing compound represented by the formula: (HX)₂R¹ A; wherein A is a functional acid group selected from -CO₂ M, -OSO₃ M, -SO₃ M, -OPO(OM)₂, - PO(OM)₂, wherein M is H or a cation such as sodium, potassium, and calcium; X is O, S, NH or NR wherein R is an alkylene group comprising 1 to 10 or 1 to 4 carbon atoms; and R¹ is an organic linking group having a valency of at least 3, comprising 1 to 50, 1 to 30, 1 to 15, or 1 to 7 carbon atoms, optionally includes one or more tertiary nitrogen, ether oxygen, or ester oxygen atoms, and is free from isocyanate-reactive hydrogen containing groups. In some embodiments, A is -CO₂ M, X is O or NH, and R¹ is a linear or branched alkylene having from 1 to 7 carbon atoms. Illustrative functional acid containing compounds include dihydroxycarboxylic acids, dihydroxysulphonic acids, dihydroxyphosphonic acids and salts thereof such as dimethylolpropionic acid (DMPA) depicted as follows (or its derivatives from GEO Specialty Chemicals, Inc. under tradename such as DMPA® Polyol HA-0135, DMPA® Polyol HA-0135LV2, DMPA® Polyol HC-0123 and DMPA® Polyol BA-0132): 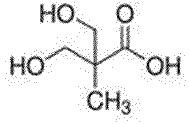 In some embodiments, the amount of functional acid in the polyurethane may be described in terms of the number of millimoles of the functional acid group A (mmol A) per 100 grams of the polyurethane (100g PU). In this regard, the polyurethane may include between 0.001 and 37 mmol A/100g PU, 0.1 and 37 mmol A/100g PU, 1 and 37 mmol A/100g PU, or between 1 and 25 mmol A/100g PU. It is believed that the incorporation of a small amount of acid functional groups in the polyurethane may further improve (relative to the polyurethanes of the present disclosure without acid functional groups) adhesion properties as well as the chemical resistance of the material to, for example, polar chemicals.

In some embodiments, the polyurethanes of the present disclosure comprise at least 25, 30, 35, 40, or 45 mol% of alkylene groups comprising at least 4, 5 or 6 carbon atoms. In some embodiments, the polyurethane comprises no greater than 65 or 60 mol% of alkylene groups comprising at least 4, 5, or 6 carbon atoms, some of which are provided by use of a polyisocyanate comprising a long chain alkylene group such as hexanediisocyanate or isophorone diisocyante. In other embodiments, the polyurethane comprises no greater than about 55 or 50 mol% of alkylene groups comprising at least 4, 5, or 6 carbon atoms. The alkylene groups typically have no greater than 24, 12, or 8 carbon atoms as previously described. The polyurethane is obtained by reacting a polyol component comprising the aromatic polyester polyol and/or other polyol have the solubility parameter(s) previously described, at least one polyfunctional aliphatic isocyanate compound, and at least one functional acid containing compound. Such composition may optionally comprise other components that do not detract from the desired heat resistance and/or chemical resistance of the polyurethane.

Non-ionic aqueous polyurethane dispersions typically utilize monoalcohols and/or polyols containing polyether groups such as those having ethylene oxide and propylene oxide (repeat) units. The polyether groups function as a water solubilizing group. The concentration of such polyether groups is typically 5-10 wt.-% based on the total weight of the polyurethane.

In contrast, the polyurethane described herein comprises little or no (i.e. zero) nonionic water solubilizing groups. Thus, the polyurethane comprises less than 5, 4, 3, 2, 1, 0.5, 0.1, or 0.05 wt.-% of such non-ionic water solubilizing groups. Further, the polyurethane described herein comprises less than 10, 9, 8, 7, 6, 5, 4, 3, 2, or 1 wt-% of non-ionic water solubilizing groups such as polyether groups.

In some embodiments, the aromatic polyester polyol is reacted with an isocyanate component such that the ratio of hydroxyl equivalents (OH groups) with respect to the NCO isocyanate equivalents (NCO groups) is about 1:1. The hydroxyl content of the resulting polyurethane is no greater than about 0.5 wt-%.

In other embodiments, the polyurethane polymers can be prepared by the reaction of a stoichiometric excess of organic polyisocyanate. The molar ratio of NCO to OH is typically about 1.3 to 1 or 1.2 to 1 or 1.1 to 1

In this embodiment, the NCO terminal groups are typically further reacted with a multi-functional polyol. Suitable multi-functional polyols may include two or more hydroxyl groups such as, for example, branched adipate glycols, trimethylolpropane, 1,2,6-hexanetriol, trimethylolethane, pentaerythritol, dipentaerythritol, tripentaerythritol.

In other embodiments, the polyurethane polymers can be prepared by the reaction of a stoichiometric excess of polyol. The molar ratio of OH to NCO is typically about 1.3 to 1 or 1.2 to 1 or 1.1 to 1.

In this embodiment, the OH terminal groups are typically further reacted with a multi-functional polyisocyanate. Suitable multi-functional polyisocyanates may include two or more isocyanate groups such as, for example, Desmodur N-3300, Desmodur N-3390 and Desmodur N-3400 from Bayer.

In addition to urethane linkages, polyurethane can contain additional groups as known in the art, provided that such additional groups do not detract from the desired heat and/or chemical resistance. In typical embodiments, the polyurethane does not contain (terminal) silyl groups.

When reacting the polyol component(s) with the isocyanate component(s), the reaction temperature is typically in the range of from about 60°C to about 90°C depending on the selection of respective reactants and selection of catalyst. The reaction time typically ranges from about 2 to about 48 hours.

The polyurethane compositions are typically prepared with a catalyst as known in the art. The amount of catalyst can range up to about 0.5 parts by weight of the polyurethane. In some embodiments, the amount of catalyst ranges from about 0.001 to about 0.05 wt.-% of the polyurethane. Examples of useful catalysts include but are not limited to those selected from the group consisting of tin II and IV salts such as stannous octoate and dibutyltin dilaurate, and dibutyltin diacetate; tertiary amine compounds such as triethyl amine and bis(dimethylaminoethyl) ether, morpholine compounds such as beta, beta'-dimorpholinodiethyl ether, bismuth carboxylates, zinc-bismuth carboxylates, iron (III) chloride, potassium octoate, and potassium acetate.

Solvents can be utilized to control the viscosity of the polyurethane. Examples of useful solvents (which are typically volatile organic compounds) added for this purpose include but are not limited ketones (e.g. methyl ethyl ketone, acetone), tertiary alcohols, ethers, esters (e.g. ethyl acetate), amides, hydrocarbons, chlorohydrocarbons, chlorocarbons, and mixtures thereof.

The resulting polyurethane typically has a molecular weight (Mw) of at least 20,000, 30,000, 40,000, or 50,000 g/mole as determined by the test method described in the examples. The molecular weight (Mw) of the polyurethane is typically no greater than 500,000 g/mole, 300,000 g/mole, or in some embodiments no greater than 275,000 g/mole or 250,000 g/mole. In some embodiments the polyurethane has a molecular weight (Mw) of between 20,000 and 500,000 g/mole, 50,000 and 300,000 g/mole, or between 100,000 and 200,000 g/mole.

In some embodiments, the polyurethane adhesives of the present disclosure may include a chemical crosslinking agent. Generally, any suitable crosslinking agent may be used. Exemplary crosslinking agents include covalent crosslinkers such as bisamides, epoxies, melamines, multi-functional amines and aziridines; and ionic crosslinking agents such as metal oxides and organo-metallic chelating agents (e.g., aluminum acetylacetonate). The amount of crosslinking agent included depends on well-understood factors such as the desired degree of crosslinking and the relative effectiveness of the crosslinking agent in the particular system. Crosslinking of the polyurethane using chemical crosslinking agents may be initiated using any conventional technique, such as thermal initiation. In some embodiments, polyurethane adhesives of the present disclosure may include from 0.1 to 5 wt. % or 0.1 to 1 wt. % of a bisamide crosslinker based on the total weight of the polyurethane. Alternatively, or additionally, in some embodiments, the polyurethane adhesives of the present disclosure may 0.1 to 5 wt. % or 0.1 to 2 wt. % of aluminum acetylacetonate crosslinker based on the total weight of the polyurethane. It is believed that the addition of a chemical crosslinking agent may further enhances the shear and cohesive strength of the adhesive, as well as the chemical and high temperature creep resistance. As an alternative to, or in addition to chemical crosslinking, the polyurethanes of the present disclosure may be crosslinked by subjecting the polyurethanes to gamma, electron beam, or ultraviolet radiation (with or without a photoinitator).

In some embodiments, the pressure sensitive adhesive comprises the polyurethane polymer described herein dissolved in a non-aqueous organic solvent. The organic solvent content typically ranges from about 2 wt. % to 98 wt. %. By non-aqueous, it is meant that the liquid medium contains less than 3, 2, or 1 wt.-% water.

In addition to the polyurethane, the pressure sensitive adhesive composition may optionally include one or more additives such as (e.g. inorganic oxide) fillers such as (e.g. fumed) silica and glass bubbles, tackifiers, adhesion promoters, plasticizers, (e.g. chemical) foaming agents, thixotropic agents, ultraviolet stabilizers, antioxidants, antistatic agents, colorants, impact resistance aids, flame retardents (e.g. zinc borate).

In some embodiments, the pressure sensitive adhesive composition comprises tackifiers and/or plasticizers to adjust the adhesion. In this embodiment, the total amount of tackifier and/or plasticizer of the adhesive composition is typically no greater than 50, 40, 30, 20, 15, 10, or 5 wt.-% solids of the total adhesive composition. In other embodiments, the pressure sensitive adhesive composition comprises little of no (i.e. zero) tackifiers and/or plasticizers. In this embodiments, the adhesive composition comprises no greater than 4, 3, 2, 1, 0.5, 0.1, or 0.05 wt-% of tackifer and/or plasticizer.

When the adhesive composition comprises little or no tackifer and/or plasticizer, the pressure sensitive adhesive properties (e.g. tack, peel adhesion) are generally contributed by the R₁ group of the polyurethane (e.g. aromatic or aliphatic polyester or polycarbonate polyol). Without intending to be bound by theory, the tack and peel adhesion can be increased by use of a longer branched alkylene group and/or by reducing the crosslinking. Conversely, the tack and peel adhesion can be decreased by use of a shorter branched alkylene group or by increasing the crosslinking. The adhesion can also be adjusted by the addition of other aliphatic polyols having longer or shorter alkylene groups.

When it is desired for the pressure sensitive adhesive composition to be transparent, the adhesive is typically free of fillers having a particle size greater than 100 nm that can detract from the transparency of the adhesive composition. In this embodiment, the total amount of filler of the adhesive composition is no greater than 10, 9, 8, 7, 6, 5, 4, 3, or 2 wt-% solids of the adhesive composition. In some favored embodiments, the adhesive composition comprises no greater than 1, 0.5, 0.1, or 0.05 wt-% of filler.

However, in other embodiments, the pressure sensitive adhesive may comprise higher amounts of inorganic oxide filler such as fumed silica.

In some embodiments, the pressure sensitive adhesive comprises colorants such as pigments and dyes including titania and carbon black. The concentration of such pigments and dyes can range up to about 20 wt-% of the total composition.

The inclusion of inorganic oxides such as (e.g. fumed) silica and titania can increase the tensile strength of the adhesive composition.

In some embodiments, the pressure sensitive adhesive may be in the form of a foam (i.e., in the form of a polymer matrix having a density that is less than the density of the polyurethane polymer itself). Foaming, or density reduction, may be achieved in a number of ways including through creation of gas-filled voids in the matrix (e.g., by means of a blowing agent), inclusion of polymeric microspheres, or inclusion of non-polymeric microspheres. In some embodiments, the polymeric microspheres may include expandable polymeric microspheres that include a polymer shell and a core material in the form of a fluid that expands upon heating. In some embodiments, the pre-expanded polymeric microspheres may be added to achieve density reduction. It is understood that foaming in a pressure sensitive adhesive improves its impact resistance and conformability.

A laminating tape can be formed by coating the pressure sensitive adhesives on a backing or release liner using conventional coating techniques. For example, these compositions can be applied by methods such as roller coating, flow coating, dip coating, spin coating, spray coating knife coating, and die coating. Coating thicknesses may vary. The composition may be of any desirable concentration for subsequent coating, but is typically at least 20 or 25 wt-% polyurethane polymer solids in an organic solvent. In some embodiments, the coating comprises to greater than about 60 wt-% solids polyurethane. The desired concentration may be achieved by further dilution of the coating composition, or by partial drying. The coating thickness may vary depending on the desired thickness of the pressure sensitive adhesive layer.

The thickness of the pressure sensitive adhesive layer is typically at least 5, 10, 15, 20, or 25 microns (1 mil) ranging up to 500 microns (20 mils) thickness. In some embodiments, the thickness of the pressure sensitive adhesive layer is no greater than 400, 300, 200, or 100 microns. The pressure sensitive adhesive can be coated in single or multiple layers.

The pressure sensitive adhesive composition may be coated upon a variety of flexible and inflexible backing materials using conventional coating techniques to produce a single coated or double coated pressure sensitive adhesive tape. The tape may further comprise a release material or release liner. For example, in the case of a single-sided tape, the side of the backing surface opposite that where the adhesive is disposed is typically coated with a suitable release material. Release materials are known and include materials such as, for example, silicone, polyethylene, polycarbamate, polyacrylics. For double-sided tapes, a second layer of adhesive is disposed on the opposing surface of the backing surface. The second layer may also comprise the polyurethane pressure sensitive adhesive as described herein or a different adhesive composition. Flexible substrates are defined herein as any material which is conventionally utilized as a tape backing or may be of any other flexible material. Examples include, but are not limited to polymeric films, woven or nonwoven fabrics; metal foils, foams (e.g., polyacrylic, polyethylene, polyurethane (including the polyurethanes of the present disclosure, neoprene), and combinations thereof (e.g. metalized polymeric film). Polymeric film include for example polypropylene (e.g. biaxially oriented), polyethylene (e.g. high density or low density), polyvinyl chloride, polyurethane, polyester (polyethylene terephthalate), polycarbonate, polymethyl(meth)acrylate (PMMA), polyvinylbutyral, polyimide, polyamide, fluoropolymer, cellulose acetate, cellulose triacetate, and ethyl cellulose. The woven or nonwoven fabric may comprise fibers or filaments of synthetic or natural materials such as cellulose (e.g. tissue), cotton, nylon, rayon, glass, ceramic materials.

A substrate may be bonded by the pressure sensitive adhesive or laminating tape described herein. The substrate may comprise the same materials as just described for the backing.

One method of bonding comprises providing a first substrate and contacting a surface of the first substrate with the pressure sensitive adhesive (e.g. laminating tape or protective film). In this embodiment, the opposing surface of the pressure sensitive adhesive is typically temporarily covered by a release liner.

In other embodiments, the method further comprises contacting the opposing surface of the pressure sensitive adhesive to a second substrate. The first and second substrate may be comprised of various materials as previously described such as metal, an inorganic material, an organic polymeric material, or a combination thereof.

In some methods of bonding, the substrate, pressure sensitive adhesive, or combination thereof may be heated to reduce the storage modulus (G') and thereby increase the (e.g. peel) adhesion. The substrate and/or pressure sensitive adhesive may be heated to a temperature up to 30, or 35, or 40, or 45, or 50, or 55, or 60, or 65 or 70°C. In some embodiments, the substrate(s) together with the adhesive bonded to the substrate(s) by means of the initial peel adhesion at ambient temperature (e.g. 25°C) is heat in an oven to the desired temperature. In other embodiments, the substrate and/or pressures sensitive adhesive is heat by means of a hot air gun.

The transparent adhesive composition described herein may also be disposed on a transparent film for use as a removable or permanent surface protection film. In some embodiments, the pressure sensitive adhesive and transparent film having a transmission of visible light of at least 90 percent.

The pressure sensitive adhesive, laminating tapes, and protective films described herein are suitable for use in the areas of electronics, appliances, automotive, and general industrial products. In some embodiments, the pressure sensitive adhesive and laminating tapes can be utilized in (e.g. illuminated) displays that can be incorporated into household appliances, automobiles, computers (e.g. tablets), and various hand-held devices (e.g. phones). The presently disclosed adhesive composition can be laminated to solid substrates at ambient temperature (25°C) and provide good high temperature/humidity stability and chemical resistance. The superior oil (e.g. oleic acid) and alcohol resistance of the presently disclosed adhesive composition makes it attractive for various applications including automotive, aerospace, electronics and appliance markets where maintaining adhesive bond strength under high temperature/humidity and chemical environment are of importance.

In some embodiments, the pressure sensitive adhesive and laminating tapes described herein are suitable for bonding internal components or external components of an illuminated display devices such as liquid crystal displays ("LCDs") and light emitting diode ("LEDs") displays such as cell phones (including Smart phones), wearable (e.g. wrist) devices, car navigation systems, global positioning systems, depth finders, computer monitors, notebook and tablet computer displays.

In some embodiments, the pressure sensitive adhesive or laminating tape may exhibit a low level of adhesion to glass or stainless steel. For example, the room temperature 180° peel values can be about 5, 10, 15 or 20 N/dm at a 300 mm/minute peel rate after a 24 hour dwell time at 25°C (as further described in the test method in the examples). In other embodiments, the 180° peel values of the pressure sensitive adhesive or laminating tape (e.g. heat bondable) can be higher, for example at least 25, 30, 35, 40, 45, 50, 55, or 60 N/dm.

In some embodiments, the pressure sensitive adhesive or laminating tape may exhibit the same of higher level of adhesion to glass or stainless steel after exposure to elevated temperatures and humidity, such as after a 72 hour dwell time at 65°C and 90% relative humidity. In some embodiments, the increase in adhesion is no greater than 300%, 250%, 200%, 150%, 100%, 90%, 80%, or 70% (as determine by subtracting the 24 hr room temperature value from the aged peel value, dividing by the 24 hr room temperature value and multiplying by 100%.

In some embodiments, the pressure sensitive adhesive or laminating tape does not dissolve in oleic acid and/or a 70% isopropyl alcohol aqueous solution after 8 hours at 70°C.

The pressure sensitive adhesive composition has a storage modulus G' as can be measured by Dynamic Mechanical Analysis (as further described in the examples) of less than 1 MPa at 25°C and a frequency of 1 hertz. In some embodiments, the pressure sensitive adhesive composition has a storage modulus G' as can be measured by Dynamic Mechanical Analysis (as further described in the examples) of less than 0.9, 0.8, 0.7, 0.6 or 0.5 MPa at 25°C and a frequency of 1 hertz. The storage modulus decreases with increasing temperature. In some embodiments, the pressure sensitive adhesive composition has a storage modulus G' of less than 0.6 or 0.5 at 35°C and a frequency of 1 hertz. In some embodiments, the pressure sensitive adhesive composition has a storage modulus G' of less than 0.5 or 0.4 at 45°C and a frequency of 1 hertz. In some embodiments, the pressure sensitive adhesive composition has a storage modulus G' of less than 0.4 or 0.3 at 55°C and a frequency of 1 hertz. In some embodiments, the pressure sensitive adhesive composition has a storage modulus G' of less than 0.3 or 0.2 at 65°C and a frequency of 1 hertz. The pressure sensitive adhesive has a storage modulus G' of less than 0.3 at frequency of 1 hertz at a temperature less than 70, or 65, or 60, or 55, or 50, or 45 °C.

The pressure sensitive adhesive has a glass transition temperature of less 5 °C as can be measured by differential scanning calorimetry (DSC). In some embodiments, the glass transition temperature is less than 0 °C or -5°C. In some embodiments, the glass transition temperature is less than -10 °C, -20 °C, -30 °C or -40 °C.

In some embodiments, the physical and adhesive properties of the pressure sensitive adhesives of the present disclosure (which include a polyurethane adhesive composition that is the reaction product of a polyol component, an aliphatic polyisocyanate component, and a functional acid containing compound) may be particularly suitable as adhesives for lens-bonding applications. For example, as established in the Examples of the present disclosure, the pressure sensitive adhesives may exhibit exceptional high temperature peel creep, high temperature anti-lifting performance, tensile drop performance, and drop resistance, at least as compared to acrylic-based pressure sensitive adhesives and/or polyurethane-based adhesives that are formed from aromatic isocyanates.

In some embodiments, the polyurethane compositions may be utilized as a primer. In these embodiments, the polyurethane compositions may include a chemical crosslinking agent, such as a covalent crosslinker such as bisamides, epoxies, and melamines; ionic crosslinking agents such as multi-functional amines and aziridines, metal oxides, and organo-metallic chelating agents (e.g., aluminum acetylacetonate), or combinations thereof. In these embodiments, the polyurethane compositions may be formed into a dilute solution (e.g. 2 to 20 wt. % solids) in an organic solvent (e.g. MEK) or solvent mixture. The solution is applied to a substrate and dried. A pressure sensitive adhesive may then be applied to the dried primer. The pressure sensitive adhesive may be a polyurethane pressure sensitive adhesive as described herein. Alternatively, the pressure sensitive adhesive may be a different pressure sensitive adhesive, such as a different polyurethane or different acrylic adhesive.

In some embodiments of the pressure sensitive adhesive composition the polyisocyanate component further comprises a multi-functional isocyanate having greater than two isocyanate groups.

In some embodiments of the pressure sensitive adhesive composition either or both of the multi-functional polyol and multi-functional isocyanate are present in an amount of no greater than 30 mol%.

In some embodiments of the pressure sensitive adhesive composition the functional acid containing compound is represented by the generic formula (HX)₂ R¹ A; wherein A is a functional acid selected from -CO₂ M, -OSO₃ M, -SO₃ M, -OPO(OM)₂, - PO(OM)₂, wherein M is H or a cation; X is O, S, NH or NR, wherein R is an alkylene group comprising 1 to 4 carbon atoms; and R¹ is an organic linking group having a valency of at least 3 and comprises 1 to 50 carbon atoms, optionally includes one or more tertirary nitrogen, ether oxygen, or ester oxygen atoms, and is free from isocyanate-reactive hydrogen containing groups. In some embodiments A is -CO₂ M, X is O or NH, and R¹ is an alkylene having from 1 to 7 carbon atoms. In some embodiments of the pressure sensitive adhesive composition the polyurethane comprises between 0.001 and 37 mmol A/100g PU.

In some embodiments of the pressure sensitive adhesive composition the composition further comprises a chemical crosslinking agent. In some embodiments the chemical crosslinking agent comprises an organo-metallic chelating agent or aziridine.

In some embodiments of the pressure sensitive adhesive composition the polyurethane has a weight average molecular weight of at least 20,000 g/mole.

In some embodiments of the pressure sensitive adhesive composition the adhesive has a 180° peel to stainless steel of at least 40N/dm at a peel rate of 300 mm/minute after a 24 hour dwell time at 25°C.

In some embodiments of the pressure sensitive adhesive composition the pressure sensitive adhesive does not dissolve in oleic acid or a 70% isopropyl alcohol aqueous solution after 8 hours at 70°C.

In some embodiments of the pressure sensitive adhesive composition the pressure sensitive adhesive has a chemical resistance rating of at least 3 for oleic acid and a 70% isopropyl alcohol aqueous solution after 8 hours at 70°C.

In some embodiments of the pressure sensitive adhesive composition the pressure sensitive adhesive has a glass transition temperature (Tg) less than 5 °C by DSC.

In some embodiments of the pressure sensitive adhesive composition when incorporated into a pressure sensitive adhesive tape that is tested in accordance with the Tensile Drop Test at 70 cm, exhibits a number of drops prior to evident visible failure of at least 10 drops.

In some embodiments the pressure sensitive adhesive composition is in the form of a foam. In some the foam comprises expandable polymeric microspheres.

In some embodiments of the laminating the substrate is a backing or a release liner. In some embodiments of the laminating tape the pressure sensitive adhesive is disposed on both major surfaces of the substrate.

Described is a protective film comprising a film; and a layer of a pressure sensitive adhesive composition described above disposed on a major surface of the film. The film and pressure sensitive adhesive composition can have transparency of at least 90%.

Described is a method of bonding comprising providing a first substrate, contacting a surface of the first substrate with the pressure sensitive adhesive described above. The method may further comprise contacting an opposing surface of the pressure sensitive adhesive to a second substrate. In the method the first and second substrate may be comprised of a metal, an inorganic material, an organic polymeric material, or a combination thereof. In the method the pressure sensitive adhesive may be heated to increase the peel adhesion.

In some embodiments the article of the invention further comprises a pressure sensitive adhesive layer disposed on the primer layer. In some embodiments the pressure sensitive adhesive layer comprises the pressure sensitive adhesive described above. In some embodiments the pressure sensitive adhesive layer comprises an acrylic pressure sensitive adhesive.

### EXAMPLES

**Table 1. Materials**

| Designation | Description | Source |
|---|---|---|
| PH-56 | Polyester Polyol Mw = 2000, under trade designation STEPANPOL PH-56 | Stepan Company, Northfield, IL |
| DPR-5205-16A | A PA-HDO polyol with a OH value of 30.5 mgKOH/g | Stepan Company, Northfield, IL |
| DPR-5205-16B | A PA-HDO polyol with a OH value of 20.1 mgKOH/g | Stepan Company, Northfield, IL |
| MEK | Methyl ethyl ketone, solvent | Avantor Performance Materials, Inc Center Valley, PA |
| DBTDA | Dibutyltin diacetate | Sigma-Aldrich, St. Louis, MO |
| Mondur MLQ | An isomeric mixture of monomeric diphenylmethane diisocyanate under trade designation MONDUR MLQ | Bayer Materials Science LLC, Pittsburgh, PA |
| VESTANAT TMDI | A mixture of the 2,2,4- and 2,4,4-trimethyl-hexamethylene diisocyanate under trade designation VESTANAT TMDI | Evonik Corporation, Parsippany, NJ |
| Desmodur H | Hexamethylene diisocyanate under trade designation Desmodur H | Bayer Materials Science LLC, Pittsburgh, PA |
| Desmodur I | Isophorne diisocyanate under trade designation Desmodur I | Bayer Materials Science LLC, Pittsburgh, PA |
| TMXDI | m-Tetramethylxylene diisocyanate under trade designation MONDUR MLQ | Allnex USA Inc, Alpharetta, GA |
| DMPA | Dimethylolpropionic Acid | Sigma-Aldrich, St. Louis, MO |
| HA0135LV2 | Acid containing diol under trade designation DMPA polyol HA0135LV2 | GEO Specialty Chemicals, Inc. Ambler, PA 19002-3420 |
| AlAcAc | Aluminum 2,4-pentanedionate | Alfa Aesar, Ward hill, MA |
| OA | 90% oleic acid | Alfa Aesar, Ward hill, MA |
| Dualite E135-025D preexpanded microspheres | Hollow polyvinylidene chloride copolymer shell, coated with calcium carbonate | Chase Corporation - Dualite, 9 Furman Hall Court, Greenville, SC 29609 |
| 2,4-pentanedione | 2,4-pentanedione | Alfa Aesar, Ward hill, MA |

### Test Methods

### Method for Chemical Resistance Test

Samples were prepared by slitting test strips 0.5 inch x 0.5 inch (1.27 cm x 1.27 cm) from each of adhesive transfer tape samples prepared. Then, release liner on one surface removed and the test strips were attached (stuck) to the bottom of a petri dish. The release liner on the second, exposed surface of the test strips were removed and the petri dish containing the attached sample test strips were set aside to dwell at room temperature (about 23°C) for 15 mins. The test strips were then submerged in either oleic acid or a mixture of isopropyl alcohol and water at a weight ratio of 70:30 (IPA/H₂O) at 70°C for 8 hrs. The resistance of the adhesive sample to oleic acid or IPA/H₂O mixture was rated using the following guidelines and reported.

**Table 2: Chemical resistance evaluation criteria**

| **Observation / Criteria** | **Chemical Resistance Rating** |
|---|---|
| Adhesive sample came off the petri dish or dissolved completely | 1 |
| Adhesive sample partially detached or dissolved along the edge | 3 |
| Adhesive sample did not detach or dissolve | 5 |

### Peel Adhesion Strength

Samples were prepared by slitting test strips 12.7 mm × 127 mm in dimension from each of adhesive tape samples prepared. Two replicates were prepared for each Example. Then the exposed adhesive surface of the test strips were adhered along the length of a stainless steel (SS) plate measuring 5.1 cm wide by 12.7 cm long by 0.12 cm thick (Type 304 with a bright annealed finish, obtained from ChemInstruments, Incorporated, Fairfield, OH) and rolled down 5 times using a 2.0 kg rubber roller. The plate was cleaned prior to applying the tape by wiping with acetone once then with heptane three times using a tissue paper (trade designation KIMWIPE, available from Kimberly-Clark Corporation, Irving, TX). After being conditioned for 1 hr at 50% relative humidity (RH) at room temperature (RT), the peel adhesion strength was evaluated using a tensile tester (MTS Insight, available from MTS Systems, Corporation, Eden Prairie, MN) equipped with 1000 N load cell, using a crosshead speed of 300 mm/min, at an angle of 180° with the test specimen held in the bottom clamp and the tail in the top clamp. The average of two test specimens was reported in N/mm. This number was reported as the "Peel on SS after 1 hr RT Dwell".

### Static Shear Strength at 70°C

The static shear strength of an adhesive was determined according to ASTM International standard, D3654/D3654M-06 (reapproved in 2011) - Procedure A, using a 500 grams load inside an oven set at 70°C. A test specimen was prepared by laminating a 0.5 in. x 1 in. (1.3 cm x 2.5 cm) piece of adhesive tape on a stainless steel (SS) panel. The time to failure, i.e., time for the weight to pull the adhesive away from panel in minutes was recorded. If no failure was observed after 10,000 minutes, the test was stopped and a value of 10,000+ minutes was recorded.

### Peel Creep Holding Strength Testing

The test specimen was prepared by laminating one of the strips of tape to a stainless steel test panel with a 2.0 kg (4.5 lb) rubber roller. The contact area of the adhesive on the panel was 2.5 cm by 2.5 cm (1 inch x 1 inch). The test specimen was first conditioned for 1 hr, then hung 180° peel vertically downwards with the weight of 100 g to form a static 180 degree peel, all in a 70°C oven. The hanging time was recorded by a timer. If no failure was observed after 10,000 minutes, the test was stopped and a value of 10,000+ minutes was recorded.

### Polymer molecular weight measurement

The molecular weight distribution of the compounds was characterized using gel permeation chromatography (GPC). The GPC instrumentation, which was obtained from Waters Corporation (Milford, MA, USA), included a high pressure liquid chromatography pump (Model 1515HPLC), an auto-sampler (Model 717), a UV detector (Model 2487), and a refractive index detector (Model 2410). The chromatograph was equipped with two 5 micrometer PL gel MIXED-D columns available from Varian Inc. (Palo Alto, CA, USA).

Samples of polymeric solutions were prepared by dissolving dried polymer samples in tetrahydrofuran at a concentration of 1.0 percent (weight/volume) and filtering through a 0.2 micrometer polytetrafluoroethylene filter that is available from VWR International (West Chester, PA, USA). The resulting samples were injected into the GPC and eluted at a rate of 1 milliliter per minute through the columns maintained at 35°C. The system was calibrated with polystyrene standards using a linear least squares analysis to establish a standard calibration curve. The weight average molecular weight (Mw) and the polydispersity index (weight average molecular weight divided by number average molecular weight (Mn)) were calculated for each sample against this standard calibration curve.

### DSC measurement

The glass transition temperature (Tg) was obtained with a TA DSC Q200 (New Castle, Del.) instrument. About 7-10 mg of PU PSA film sample was sealed in an Tzero pan. The sample was heated from -70 to 200° C. at a rate of 5° C./min, isothermally conditioned at -70° C. for 5 min.

### Tensile Drop Test - Room Temperature Conditioning

Referring to FIG. 1, a polycarbonate (PC) panel (1/8x2x4 inch, Precision Punch & Plastics Co., Minnetonka, MN) was washed three times with 2-propanol. The surface energy of the washed surface was measured using a portable goniometer (available from FIBRO System AB, Sweden, under the trade designation "POCKET GONIOMETER PG-X"), and was found to be approximately 39□40 dyne/cm.

Two strips of double-sided pressure-sensitive adhesive tape 100 (or a comparative example tape material) having a width of "T" = 2 mm and a length of 2 inches (5.1 cm) were applied lengthwise across the width of the underside cavity of a custom made aluminum test fixture 196, such that the strips of tape were "S" = 0.5 inch (∼1.3 cm) from the end walls of the cavity, as shown in FIG. 1. Test fixture 196 had a width "M" = 2 inches (5.1 cm) by length "N" = 4.5 inches (13.97 cm by height "P" = 0.5 inch (∼1.3 cm), and had a mass of 143 grams. Polycarbonate panel 192 was centered within the cavity of test fixture 196 and in contact with the each of the tape strips 100 to provide a bonded article. The bonded article was then positioned with the cavity facing upward and a 4 kg (8.8 lb.) weight was placed on the exposed surface of the polycarbonate panel for 15 seconds, after which time the weight was removed and the bonded article was allowed to dwell for 24 hours at 23°C and 50% RH. The bonded article was then evaluated for drop resistance in a tensile mode using a drop tester (available from Shinyei Corporation of America, New York, NY, under the trade designation "DT-202") and a horizontal orientation of the bonded article with the polycarbonate substrate facing downward, as in FIG. 1 (i.e., with the large arrow indicating downward direction). The bonded article was dropped from a height of either 40 cm or 70 cm onto a 1.2 cm thick steel plate. Two samples were tested for each height, the number of drops to failure recorded for each sample. Tensile Drop Test failures are determined by visual inspection for fracture or partial bond line failures, or detachments stemming from, for example, pop-off, cohesive or adhesive failures. The failure counts in the data table represent the number of sample drops prior to any visibly evident failures.

### Anti-Repulsion Test

An anodized aluminum strip (180 mm x 20 mm x 0.5 mm) was cut from sheet stock (available from Lawrence & Fredrick, Stremwood, IL under the trade designation "5005 ALLOY H34 TEMPER MILL FINISH UND/UNSEALED ANODIZED ALUMINUM"). A polycarbonate substrate having a length of 7.9 inches (200 mm), width of 1.19 inch (30 mm), and a thickness of 0093 inch (∼2 mm) was obtained from Bayer MaterialScience AG, Germany, under the trade designation "MAKROLON 2405".

A double coated adhesive tape sample (>30 mm width and 200 mm length, and protected on one side by release liner) was laminated onto the anodized aluminum strip using a rubber roller. Excess tape around all four edges of aluminum strip were carefully trimmed away. The release liner was removed, and then using light finger pressure, the adhesive side of the specimen was pressed onto the substrate, aligning one end of the specimen edge flush with end of substrate and down the center. The laminated specimen with aluminum strip side up was placed on a rolling machine, and was rolled once in each direction at 12 inches (∼30 cm) per minute with 15 pound (∼6.8 kg) weight. The specimen was stored in a constant temperature and humidity room (23 +/- 2C and 50 +/- 1% relative humidity) for 24 +/- 2 hours.

Ends of the laminated specimen were bent slightly downward (with substrate side down), and the laminated specimen was placed in a bending jig having a length of 190 mm. The bending jig with test sample was placed into a 70°C oven for 24 +/- 1 hour. The bending jig with sample was then removed from the oven and allowed to cool for 30 minutes. A steel ruler was then used to measure "lifting" of the specimen from substrate at very end of tape sample. Distance was measured from top surface of substrate to bottom face of adhesive surface, and the value was recorded to the nearest 1 mm.

### Experimental:

To prepare samples for the peel adhesion strength, shear, and peel creep tests, polyurethane adhesive solutions were coated onto a 51 micrometer thick polyester film backing and dried in a 70°C oven for 15 minutes to produce a single coated adhesive tape having an adhesive thickness of approximately 50 micrometers.

For drop, anti-lift, and tensile impact tests, two layers of transfer tape were laminated together to produce a 100 um adhesive sample.

**Comparative Example 1 (CE1)**: To a resin reaction vessel equipped with a mechanical stirrer, a condenser and a nitrogen inlet were added 50.0 g hydroxyl terminated polyester PH-56 (a hydroxyl value of 56 mg KOH/g) and 10.0 g of MEK. The solution was heated up to 75°C, then added with stirring 2.8 g 1 wt% DBTDA in MEK and 6.26 g of Mondur MLQ. After 2 h reaction, 20 g MEK was added to dilute the viscosity of the system. Then, the temperature was maintained at 75°C for about 10 h or until no free NCO group was observed by FT-IR. Finally 26.5 g MEK was added to adjust the solids content of up to 50 wt%, resulting in clear and transparent polyurethane PSA solution. Mw and polydispersity of example E1 is 85K and 1.98, respectively, determined by GPC. The Tg is -0.1°C determined by DSC.

**Example 2 (E2) :** To a resin reaction vessel equipped with a mechanical stirrer, a condenser and a nitrogen inlet were added 30.0 g hydroxyl terminated polyester PH-56 (a hydroxyl value of 56 mg KOH/g), 1.83 g DMPA and 10.0 g of MEK. The solution was heated up to 75°C, then added with stirring 3.0 g 1 wt% DBTDA in MEK and 9.37 g of Mondur MLQ. After 2 h reaction, 20 g MEK and 20 g PH-56 was added and stirred at 75°C for about 10 h or until no free NCO group was observed by FT-IR. Finally 32 g MEK was added to adjust the solids content of up to 50 wt%, resulting in clear and transparent polyurethane PSA solution. Mw and polydispersity of Example E2 is 76.1K and 2.26, respectively, determined by GPC. The solution was further diluted to 5% with MEK to be used as a primer solution.

**Example 3 (E3) :** To a resin reaction vessel equipped with a mechanical stirrer, a condenser and a nitrogen inlet were added 87.5 g hydroxyl terminated polyester DPR-5205-16A (a hydroxyl value of 30.5 mg KOH/g), 3.5g HA0135LV2, 20.0 g MEK and 0.05g DBTDA. The solution was heated up to 80°C for 20 min to obtain homogenous solution, then added with stirring 7.49g VESTANAT TMDI. After 2 h reaction, 20 g MEK was added to dilute the viscosity of the system. Then, the temperature was maintained at 80°C for about 10 h or until no free NCO group was observed by FT-IR. Finally 27 g MEK was added to adjust the solids content of up to 60 wt%, resulting in clear and transparent polyurethane PSA solution. The Mn, Mw and polydispersity of example E3 is 22622, 177967 and 7.86, respectively, determined by GPC. The Tg is -4.81°C determined by DSC.

**Example 4 (E4) :** To a resin reaction vessel equipped with a mechanical stirrer, a condenser and a nitrogen inlet were added 87.5 g hydroxyl terminated polyester DPR-5205-16A (a hydroxyl value of 30.5 mg KOH/g), 3.5g HA0135LV2, 20.0 g MEK and 0.05g DBTDA. The solution was heated up to 80°C for 20 min to obtain homogenous solution, then added with stirring 5.99g Desmodur H. After 2 h reaction, 30g MEK was added to dilute the viscosity of the system. Then, the temperature was maintained at 80°C for about 10 hour or until no free NCO group was observed by FT-IR. Finally 68.5 g MEK was added to adjust the solids content of up to 45 wt%, resulting in clear and transparent polyurethane PSA solution. The Mn, Mw and polydispersity of example E4 is 39262, 164066 and 4.178, respectively, determined by GPC. The Tg is -7.1°C determined by DSC.

**Example 5 (E5) :** To E4 polymer solution, 1 phr of AlAcAc based on 100 parts of dry E4 polymer was added just before casting the solution into adhesive film. 1.7 phr of 2,4-pentanedione was also added into the solution to prevent gel formation of the solution prior to coating.

**Example 6 (E6) :** To E4 polymer solution, 0.25 phr of bisamide based on 100 parts of dry E4 polymer was added just before casting the solution into adhesive film.

**Example 7 (E7):** To E4 polymer solution, 2.3phr of 25 um pre-expanded microspheres from Dualite (Greenville, SC) based on 100 parts of dry E4 polymer was added and mixed well.

**Comparative Example 8 (CE8) :** To a resin reaction vessel equipped with a mechanical stirrer, a condenser and a nitrogen inlet were added 87.5 g hydroxyl terminated polyester DPR-5205-16A (a hydroxyl value of 30.5 mg KOH/g), 3.5g HA0135LV2, 20.0 g MEK and 0.05g DBTDA. The solution was heated up to 80°C for 20 min to obtain homogenous solution, then added with stirring 8.88g Mondur MLQ. After 2 h reaction, 20g MEK was added to dilute the viscosity of the system. Then, the temperature was maintained at 80°C for about 10 h or until no free NCO group was observed by FT-IR. Finally 26.5 g MEK was added to adjust the solids content of up to 60 wt%, resulting in clear and transparent polyurethane PSA solution. The Mn, Mw and polydispersity of example E8 is 15157, 48880 and 3.22, respectively, determined by GPC. The Tg is -5.83 °C determined by DSC.

**Example 9 (E9) :** To a resin reaction vessel equipped with a mechanical stirrer, a condenser and a nitrogen inlet were added 87.5 g hydroxyl terminated polyester DPR-5205-16A (a hydroxyl value of 30.5 mg KOH/g), 3.5g HA0135LV2, 20.0 g MEK and 0.05g DBTDA. The solution was heated up to 80°C for 20 min to obtain homogenous solution, then added with stirring 8.70g TXMDI. After 2 h reaction, 20g MEK was added to dilute the viscosity of the system. Then, the temperature was maintained at 80°C for about 10 h or until no free NCO group was observed by FT-IR. Finally 27 g MEK was added to adjust the solids content of up to 60 wt%, resulting in clear and transparent polyurethane PSA solution. The Mn, Mw and polydispersity of example E9 is 13489, 46380 and 3.43, respectively, determined by GPC. The Tg is 1.34 °C determined by DSC.

**Example 10 (E10) :** To a resin reaction vessel equipped with a mechanical stirrer, a condenser and a nitrogen inlet were added 87.5 g hydroxyl terminated polyester DPR-5205-16B (a hydroxyl value of 20.1 mg KOH/g), 3.5g HA0135LV2, 20.0 g MEK and 0.047g DBTDA. The solution was heated up to 80°C for 20 min to obtain homogenous solution, then added with stirring 4.66g HDI. After 2 h reaction, 30g MEK was added to dilute the viscosity of the system. Then, the temperature was maintained at 80°C for about 10 h or until no free NCO group was observed by FT-IR. Finally 45 g MEK was added to adjust the solids content of up to 50 wt%, resulting in clear and transparent polyurethane PSA solution. The Mn, Mw and polydispersity of example E10 is 38539, 208031 and 5.39, respectively, determined by GPC. The crosslinker of 0.25 phr of bisamide based on 100 parts of dry polyurethane polymer was added just prior to coating.

**Example 11 (E11) :** To E10 polymer solution, 1 phr of AlAcAc based on 100 parts of dry E10 polymer was added just before casting the solution into adhesive film. 1.7 phr of 2,4-pentanedione was also added into the solution to prevent gel formation of the solution prior to coating.

**Example 12 (E12) :** To E10 polymer solution, 0.25 phr of bisamide based on 100 parts of dry E4 polymer was added just before casting the solution into adhesive film.

**Comparative Example 13 (CE13):** This is an acrylic adhesive commercially available from 3M, was included as a comparative example.

Listed in Table 3 are physical and adhesive properties of the above-described examples and comparative examples. Exceptional high temperature peel creep and anti-lifting performances were obtained with the PU compositions in this invention, compared to acrylic adhesives. 70C shear was improved with the addition of chemical crosslinking, as seen in E5, E6, and E7, in comparison to E4.

**Table 3. Physical and adhesive properties of examples and comparative examples**

| Sample ID# | Isocyanate Type | -COOH **[mmol/ 100g PU]** | Mw | DSC Tg (°C) | Peel on SS After 1hr RT Dwell (N/mm) | 70°C Shear (min) | 70°C Peel Creep (min) | 70°C Lifting on PMMA (mm) | 85°C /85% RH Lifting (mm) |
|---|---|---|---|---|---|---|---|---|---|
| CE1 | MDI | 0 | 85K | -0.1 | 0.67 | 72 | 68 | | |
| CE8 | MDI | 5.49 | 49K | -5.8 | 0.56 | 10000+ | 666 | | |
| E9 | TMXDI | 5.50 | 46K | 1.3 | 0.69 | 129 | 329 | | |
| E3 | TMDI | 5.57 | 178K | -4.8 | 0.70 | 1,342 | 366 | | |
| E4 | HDI | 5.66 | 164K | -7.1 | 0.82 | 8957 | 3882 | | |
| E5 | HDI | 5.66 | 164K | | 0.72 | 10000+ | 665 | | |
| E6 | HDI | 5.66 | 164K | | 1.04 | 10000+ | 2127 | 0 | 0 |
| E7 | HDI | 5.66 | 164K | | 0.68 | 10000+ | 2544 | 0 | 0 |
| E12 | HDI | 5.74 | 208K | | 0.64 | 5602 | 5292 | | |
| CE13 | NA | - | NT | NT | 0.53 | 10000+ | 250 | | |

Tensile drop performances were first evaluated with the Al and PC panels primed with primer example, E2. The primer solution was manually applied to the panels with a rectangular head swab (CleanTips® Swabs from Texwipe®, Kernersville, NC, USA), using the minimum amount that will fully coat the surface. The primer coating was allowed to dry at RT for 10 minutes before applying the tape. Results were listed in Table 4. Polyurethane adhesives with aliphatic isocyanates, i.e., E3 and E4, performed much better than ones with aromatic isocyanates, i.e., E1, E8, and E9.

**Table 4. Tensile drop test results with primer example, E2; results shown as number of drops prior to evident visible failure.**

| Sample | 40 CM | 70 CM | 120 CM | 200 CM |
|---|---|---|---|---|
| CE1 | 19 | | | |
| CE8 | 30 | 12 | | |
| E9 | 30 | 15 | | |
| E3 | 30 | 30 | 20 | |
| E4 | 30 | 30 | 30 | 18 |

Tensile drop performances were then also evaluated without primer, E2 (Table 5). Even without primer, polyurethane adhesives with aliphatic isocyanate showed exceptional drop resistance, compared to both polyurethane adhesives with aromatic isocyanate and also acrylic adhesive. Drop performance was further improved with the inclusion of expanded microspheres, as shown in the comparison of E6 and E7. Increasing the Mw of the polyol also improves drop performance, as seen in the comparison between E4 and E12.

The surprising fact that the same trend was observed in drop performance with and without primer for polyurethane adhesives with aromatic and aliphatic isocyanates suggest that the difference comes from the bulk physical properties rather than interfacial properties. Tg can't completely explain the difference either, as E3 has better drop performance than E8, despite its slightly higher Tg. It seems that PU polymers with aliphatic isocyanate can distribute the impact stress more evenly within the adhesive, and thus reduce chance for high interfacial and bulk stress concentration and early bond failure.

**Table 5. Tensile drop test results without primer; results shown as number of drops prior to evident visible failure.**

| Sample | 40 CM | 70 CM | 120 CM | 200 CM |
|---|---|---|---|---|
| CE1 | 2 | | | |
| E3 | 30 | 12 | | |
| E4 | 30 | 19 | | |
| E6 | 30 | 20 | | |
| E7 | 30 | 30 | 30 | 8 |
| E12 | 30 | 30 | 30 | 3 |
| CE13 | 2 | | | |

The compositions in this invention possess excellent chemical resistance (see Table 6) in comparison to commercial acrylic adhesive tape.

**Table 6. Chemical resistance ranking**

| Sample ID# | Oleic Acid | IPA/H2O |
|---|---|---|
| CE1 | 5 | 5 |
| E4 | 5 | 5 |
| E6 | 5 | 5 |
| E5 | 5 | 5 |
| E10 | 5 | 5 |
| E11 | 5 | 5 |
| E6 | 5 | 5 |
| E7 | 5 | 5 |
| CE13 | 1 | 3 |

## Claims

1. A pressure sensitive adhesive composition comprising
a polyurethane polymer, wherein the polyurethane polymer comprises the reaction product of an aliphatic polyisocyanate component comprising a polyisocyanate that is a liquid at 25°C;
a polyol component comprising repeat units of
an ortho- or meta- phthalate, and
an alkylene group comprising at least 4 carbon atoms; and
a functional acid containing compound:
wherein the pressure sensitive adhesive has a G' less than 1 MPa at 25°C and a frequency of 1 hertz.

2. The pressure sensitive adhesive composition of claim 1 wherein aliphatic polyisocyanate component comprises an aliphatic cyclic polyisocyanate.

3. The pressure sensitive adhesive composition of claim 1 wherein the polyol component comprises a polymeric polyester polyol having the structure 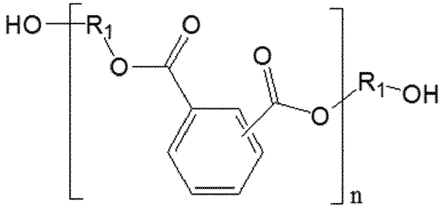
wherein R₁ is independently an alkylene group comprising at least 4 carbon atoms,
n is at least 2, and
the ester group substituents are bonded to the ring at an ortho- or meta- position.

4. The pressure sensitive adhesive composition of claim 1 wherein the polyol component further comprises a multi-functional polyol having greater than two hydroxyl groups.

5. The pressure sensitive adhesive composition of claim 1, wherein the pressure sensitive adhesive composition is in the form of a foam.

6. A laminating tape comprising
a substrate; and
a layer of a pressure sensitive adhesive composition according to claim 1 disposed on a major surface of the substrate.

7. An illuminated display device comprising a component bonded with the pressure sensitive adhesive of claim 1.

8. An article comprising
a substrate; and
a primer layer comprising the polyurethane polymer of claim 1.

## Patentansprüche

1. Eine Haftklebstoffzusammensetzung, umfassend
ein Polyurethanpolymer, wobei das Polyurethanpolymer das Reaktionsprodukt einer aliphatischen Polyisocyanatkomponente umfasst, umfassend ein Polyisocyanat, das bei 25 °C flüssig ist;
eine Polyolkomponente, umfassend Wiederholungseinheiten
eines Ortho- oder Metaphthalats und
einer Alkylgruppe mit mindestens 4 Kohlenstoffatomen; und
eine funktionelle säurehaltige Verbindung:
wobei der Haftklebstoff ein G' von weniger als 1 MPa bei 25 °C und eine Frequenz von 1 Hertz aufweist.

2. Die Haftklebstoffzusammensetzung nach Anspruch 1, wobei die aliphatische Polyisocyanatkomponente ein aliphatisches cyclisches Polyisocyanat umfasst.

3. Die Haftklebstoffzusammensetzung nach Anspruch 1, wobei die Polyolkomponente ein polymeres Polyesterpolyol umfasst mit der Struktur 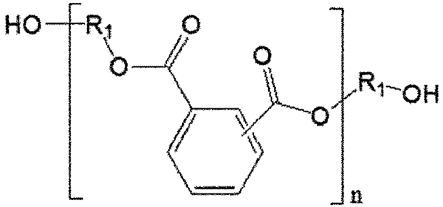
worin R₁ unabhängig eine Alkylengruppe ist, die mindestens 4 Kohlenstoffatome umfasst,
n mindestens 2 ist und
die Estergruppen-Substituenten an einer Ortho- oder Metaposition an den Ring gebunden sind.

4. Die Haftklebstoffzusammensetzung nach Anspruch 1, wobei die Polyolkomponente ferner ein multifunktionelles Polyol mit mehr als zwei Hydroxylgruppen umfasst.

5. Die Haftklebstoffzusammensetzung nach Anspruch 1, wobei die Haftklebstoffzusammensetzung in Form eines Schaums vorliegt.

6. Ein Laminierband, umfassend
ein Substrat; und
eine Schicht einer druckempfindlichen Klebstoffzusammensetzung nach Anspruch 1, die auf einer Hauptoberfläche des Substrats angeordnet ist.

7. Eine beleuchtete Anzeigevorrichtung, umfassend eine Komponente, die mit dem Haftklebstoff nach Anspruch 1 verbunden ist.

8. Ein Artikel, umfassend
ein Substrat; und
eine Grundierungsschicht, die das Polyurethanpolymer nach Anspruch 1 umfasst.

## Revendications

1. Composition d'adhésif sensible à la pression comprenant
un polymère polyuréthane, dans laquelle le polymère polyuréthane comprend le produit de réaction d'un composant polyisocyanate aliphatique comprenant un polyisocyanate qui est liquide à 25 °C ;
un composant polyol comprenant des motifs de répétition de
un ortho- ou méta- phtalate, et
un groupe alkylène comprenant au moins 4 atomes de carbone ; et
un composé contenant un acide fonctionnel :
dans laquelle l'adhésif sensible à la pression a un G' inférieur à 1 MPa à 25 °C et à une fréquence de 1 hertz.

2. Composition d'adhésif sensible à la pression selon la revendication 1 dans laquelle le composant polyisocyanate aliphatique comprend un polyisocyanate cyclique aliphatique.

3. Composition d'adhésif sensible à la pression selon la revendication 1 dans laquelle le composant polyol comprend un polyester-polyol polymère ayant la structure 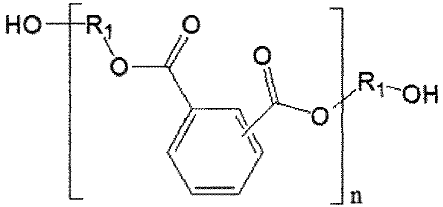
dans laquelle R₁ est indépendamment un groupe alkylène comprenant au moins 4 atomes de carbone,
n vaut au moins 2, et
les substituants à groupe ester sont liés au cycle en une position ortho ou méta.

4. Composition d'adhésif sensible à la pression selon la revendication 1 dans laquelle le composant polyol comprend en outre un polyol multifonctionnel ayant plus de deux groupes hydroxyle.

5. Composition d'adhésif sensible à la pression selon la revendication 1, dans laquelle la composition d'adhésif sensible à la pression est sous la forme d'une mousse.

6. Ruban de stratification comprenant
un substrat ; et
une couche d'une composition d'adhésif sensible à la pression selon la revendication 1 disposée sur une surface principale du substrat.

7. Dispositif d'affichage éclairé comprenant un composant lié à l'adhésif sensible à la pression selon la revendication 1.

8. Article comprenant
un substrat ; et
une couche d'apprêt comprenant le polymère polyuréthane selon la revendication 1.
